# EUROPEAN PATENT SPECIFICATION

(11) **EP 2 645 631 B1**
(45) Date of publication and mention of the grant of the patent: **21.11.2018**
(21) Application number: 13159475.6
(22) Date of filing: 15.03.2013
(51) Int. Cl.: H04L 12/24

(54) **A method and a system for automating an enterprise network optimization**
Verfahren und System zur Automatisierung einer Unternehmensnetzwerkoptimierung
Procédé et système permettant d'automatiser l'optimisation d'un réseau d'entreprise

(30) Priority: 26.03.2012 IN MU08072012
(43) Date of publication of application: 02.10.2013
(73) Proprietor: Tata Consultancy Services Limited, 400021 Mumbai, Maharashtra (IN)
(72) Inventor: Nadaf, Shameemraj M., 122016 Gurgaon- Haryana (IN); Rath, Hemant Kumar, 560066 Bangalore, Karnataka (IN); Simha, Anantha, 560066 Bangalore, Karnataka (IN)
(74) Representative: V.O.

(56) References cited:
- WO-A1-2011/034457
- US-A1- 2008 077 366
- US-A1- 2010 285 788
- US-A1- 2010 318 658

## Description

### FIELD OF THE INVENTION

The present invention relates to optimization of data centers. Particularly the invention provides a method and system for optimizing networks in data centers and transformation of the data centers for consolidation.

### BACKGROUND OF THE INVENTION

To support the consumer requirements, organizations across the information technology sector house big and complex IT infrastructure at different locations. These complexes, also known as data centers, comprise a variety of equipments such as plurality of servers, plurality of storages devices, various equipments such as telecommunication, networking, switch and other electronic equipment.

Introduction of new products or services, often flood the businesses with large number of consumers and their queries, making it necessary to refresh the infrastructure to meet the needs. However, the existing economic situation and challenges faced by a chief information officer (CIO) does not permit an organization to invest in refreshing the existing infrastructure.

One of the major challenges faced by a CIO is to run the IT operations both at organizational level and at data centers as a profit center rather than as a cost center as it accounts for 10-20% of total cost of ownership. To meet the challenge the CIO has to find way by which he or she can consolidate multiple data centers to fewer ones, optimize the network infrastructure at the existing data centre, so that the cost of operations can be reduced. However, to dynamically optimize or transform the data centre or IT infrastructure, the CIO has to depend upon network vendors such as Cisco, Juniper to carry out necessary network related modifications.
The patent application US20070299746 by Haley et al. discloses a convergence tool for analyzing an information technology infrastructure that integrates network performance, quality of experience (QoE), and anticipated financial return parameters, which are interdependent on one another. One aspect of the invention includes a method including a step of identifying an information technology infrastructure configuration having an estimated subscriber load resulting from at least one service provided over the infrastructure. Performance metrics for the infrastructure can be computed based upon the subscriber load. Quality of experience metrics for subscribers receiving the service via the infrastructure can be determined based in part upon the computed performance metrics. Financial metrics can be calculated that are based in part upon an expected subscriber population, which is based in part upon the determined quality of experience metrics. The expected subscriber population can be used to adjust the estimated subscriber load. Haley et al. provides information relating to capacity upgradation of a network or data center by predicting the load and performance of the network and lays not emphasis on system re-architecting of the existing setup.

US20060053094 by Prasad et. al. discloses a method for self-service, automated information technology infrastructure management system that includes receiving minimal information pertaining to an information technology infrastructure from a user at a web portal, automatically gathering additional infrastructure information using the minimal information received from the user, and automatically monitoring the information technology infrastructure by collecting infrastructure data and examining the collected infrastructure data for a deviation from a normal operating condition. The disclosure by Prasad et. al. mainly focuses on analyzing the existing setup of the network infrastructure by performing as a management tool for operation.
The method and system disclosed in US20110022812 application filed by Linden et al. teaches about establishing a cloud bridge between two virtual storage resources and for transmitting data from one first virtual storage resource to the other virtual storage resource. The system disclosed includes a first virtual storage resource or cloud, and a storage delivery management service that executes on a computer and within the first virtual storage resource. The storage delivery management service receives user credentials of a user that identifies a storage adapter. Upon receiving the user credentials, the storage delivery management service invokes the storage adapter which then executes an interface that identifies a second virtual storage resource and includes an interface translation file. The storage delivery management service accesses the second virtual storage resource and establishes a cloud bridge with the second virtual storage resource using information obtained from the second virtual storage resource and information translated by the storage adapter using the interface translation file. Linden et al. provides a cloud bridge between virtual storage devices for performance monitoring and reporting.

US20100042449 by Thomas discloses a method according to an embodiment that comprises accessing one or more parameters based on an IT service request received from an upper-layer IT interface, the parameters formatted according to an upper-layer IT interface construct. Appropriate IT domains are determined, according to at least a portion of the parameters, from a number of IT domains for implementing IT infrastructure for fulfilling the request, the domains each associated with one or more vendor-specific solutions for providing IT infrastructure of a type associated with the domain. Using a common semantic inter-relational data model that includes mappings of constructs for upper-layer IT interfaces to constructs for IT domains, at least a portion of the parameters are translated from the upper-layer IT interface construct into constructs suitable for use by the determined appropriate domains. One or more parameterized instructions operable to cause appropriate vendor-specific implementations of the determined appropriate domains to implement appropriate infrastructure for fulfilling the request are communicated. The system deals with monitoring and reporting of heterogeneous infrastructure.

The US2002069102 application by Vellante et al. discloses a method and system for assessing and quantifying the business value of an information technology application or set of applications, particularly as those application or applications are subjected to a proposed change or variation. The method includes steps wherein a base application value is derived, following which a business experience based coefficient or factor is derived and, by using that coefficient or factor, the base application value is uplifted to provide an actual application value for an application or applications. A potential business value is derived by operating on the actual application value with a value representing the perceived value of an enablement attribute construct corresponding with the noted change to be applied. The ultimately sought net business value is derived for an application by removing the operational cost of the application from the potential business value. As an adjunct to the method the actual application value may be increased by the value of the highest optimized business value of an enablement attribute construct of the application to provide upper bound maximum business value of an application for comparing the relative results of any given analysis.

Peng et al. in "On-Demand Services Composition and Infrastructure Management" describes about several engineering applications that involves distributed software services. Due to the complexity of these applications, an efficient and flexible service composition framework is needed. A reference service composition framework is introduced to address two issues prevailing in current service composition: interface incompatibility and performance. The reference framework applies active mediation to enhance efficient execution of applications employing composed services. As the number of services becomes large, the composed application imposes challenge on the service infrastructure management. A reliability model is introduced for building an automatic infra-structure management paradigm.

The paper by Wang, "Towards an Automatic IT Infrastructure Management Paradigm for Manufactory and Enterprise" describes about mission critical manufactory and enterprise IT infrastructure and on-line internet services require 24x7 availability and usually have an agreed Service Level Agreements (SLA) around its services offering. Currently, most enterprise and manufactory IT datacenters experience severe problems managing the large N tier, networked environments that these mission critical systems run on. Most of these problems arise from the complexity of the infrastructure (containing many moving parts) itself rather than building the applications. Maintainability of the IT system for long-term operational efficiency is largely missing. On the other hand, new IT technologies aiming at automating the deployment and maintenance of IT infrastructure are emerging. One promising technology is that of autonomic computing where the IT infrastructure and its components are self-configuring, self healing, self-optimizing and self-protecting and thus free of the management complexity to a large degree. This paper proposes a management model for enterprise IT infrastructure using self-managing paradigm for enterprise IT system and then describes the procedure for using the model as the basis for providing realistic Quality of Service (QoS) and SLA for IT infrastructure services. We also suggest this autonomic infrastructure management model be applied to the management of complex manufacturing systems, including the management of the enhanced agile/lean/integration and configurable manufacturing systems. To summarize the reference, it teaches about managing existing IT infrastructure based on self-managing paradigm.

Graupner in "Architecture for the Automated Management of Data Center IT Infrastructure" describes about IT Infrastructure Management in the Data Center. The overall goals of operating systems and IT infrastructure management in a data center are essentially similar: to execute applications and deliver computational services in a controlled and coordinated manner. Like in operating systems, portions of data center components must be selected, configured and transformed into resources that can drive applications. In a data center, these activities are performed by organizations of specialists who are concerned with decision-making and execution of IT management tasks. Management systems are directed towards supporting people, they provide little support for autonomous decision making and management task automation. The management of a data center is a complex and thus fragmented task. Higher-ordered tasks, such as resource allocation and scheduling, are performed as planning tasks by one group of specialists. Another group is concerned with configuration and deployment, while yet another is in charge of operational management. Different specializations have emerged for different domains. Servers, networks and storage are largely managed separately by different groups of specialists today. The paper discloses about managing of an existing IT system but fails to disclose about a modified IT landscape in a transformed enterprise.

A publication by IBM, "IT Transformation and Optimization Consulting Services - IT optimization solution framing" describes about a comprehensive roadmap designed to help reduce IT costs and complexity and improve service levels. The publication teaches about delivering an umbrella of services to address the complexities of evaluating, rationalizing and right-sizing an IT organization. The paper helps to enable more effective and efficient response to changing marketplace opportunities by facilitating the alignment of financial, business and IT objectives. The reference assists in lowering total cost of ownership through improved asset utilization and reduced asset acquisition.

Jain in "Network Infrastructure Management System & Sla Generation Tool" aims at giving a simplified solution to network device management at the data centers of various countries for the whole organization which also provides a graphical user interface for internal DNS server using MYSQL database in the backend. The reference teaches about a new automatic service level agreement (SLA) generation tool for a computer system and network monitoring software application (Nagios) and developed scripts for updating SharePoint's database. The focus of the paper is network management and SLA generation.

A publication by Design, "On Network Infrastructure Management" describes about setting of industries 'best practice' standards for company IT policy and procedures, enhancing the availability and accessibility of information, promoting adaptability of network resources to target your business needs, ensuring interoperability between network infrastructure and external sources maintaining strict change control policies and procedures and ensuring the effective management and optimal operation of key network infrastructure devices.
The Patent application WO 2011/034457 A1 (D1) discloses computer-based methods and apparatuses, including computer program products, for network configuration management. In some examples, a network configuration management system generates a difference network configuration for a managed network and identifies a network change case from the difference network configuration. The network configuration management system can further select a network change case application template and select a configuration file template. The network configuration management system can further generate device configuration file for a network device and store the device configuration file.

The above mentioned prior arts fail to disclose an efficient method and system for re-architecting the WAN/LAN/SAN. Another drawback observed in the references cited above is that present systems do not consider existing data to compute new infrastructure taking into account other changes happening in the infrastructure environment. Yet another drawback of the above mentioned system is that these systems are needed to deploy in the customer network to collect data relating data centre management.

Hence need in the art to eradicate dependency on vendor for network transformation and optimization, creation of a robust and scalable network infrastructure and reduction of cost both in terms of operations and ownership.

### OBJECTIVE OF THE INVENTION

In accordance with the present invention, the primary objective is to provide a method and system for automating an enterprise network transformation or optimization.

Another objective of the invention is to provide a method and system for automating information technology network infrastructure management process by analyzing the collected data pertaining to the present IT network and taking into account the transformation activity in the overall IT domain.

Another objective of the present invention is to provide a method and system that modifies network in order to meet the network performance by computing the LAN and WAN aspects of the network.

Yet another objective of the invention is to provide a method and system for transforming or optimizing IT network considering the Quality of Service (QoS)/ Quality of Experience (QoE) constraints.

Still another objective of the invention is to provide a method and system for performing approximate cost analysis of the IT network.

### SUMMARY OF THE INVENTION

Before the present methods, systems, and hardware enablement are described, it is to be understood that this invention in not limited to the particular systems, and methodologies described, as there can be multiple possible embodiments of the present invention which are not expressly illustrated in the present disclosure. It is also to be understood that the terminology used in the description is for the purpose of describing the particular versions or embodiments only, and is not intended to limit the scope of the present invention.

The present invention provides a method and system which uses constraint based optimization techniques to achieve WAN optimization, generate a topology map taking into account the new IT architecture post transformation, including the list of network components to be utilized, and perform both analysis of as-it-is state and transformed state i.e. to-be-states.

In one aspect of the present invention a method and system is provided for automating an enterprise network transformation or optimization. Presently the systems used for monitoring and reporting of network systems in a data centre perform a role of operational management. They do not consider scaling the existing infrastructure. The monitoring aspect overlooks the pre-defined threshold values for a network.

In an embodiment of the invention a method and system is provided for automating information technology network infrastructure management process by analyzing the collected data pertaining to the present IT network and taking into account the transformation activity in the overall IT domain. Present systems for monitoring and reporting both automated and manual consider the network systems individually for a given data center the fail to take a snapshot of the all data centers collectively to optimize the process unlike in the present disclosure wherein the system in configured to consolidate and optimize IT infrastructure by considering all the data centers across the domain.

In yet another aspect of the present invention a method and system is disclosed that modifies the network in order to meet the network performance. The method and system achieves this by computing the LAN and WAN aspects of the network. According to an embodiment of the present invention the system computes, analyses the existing setup of the network that is the local area network (LAN) or wide area network (WAN) in order to scale up the performance of the network has desired by the CIO.

### BRIEF DESCRIPTION OF DRAWINGS

The foregoing summary, as well as the following detailed description of preferred embodiments, is better understood when read in conjunction with the appended drawings. For the purpose of illustrating the invention, there is shown in the drawings example constructions of the invention; however, the invention is not limited to the specific methods and product disclosed in the drawings:
**Figure 1** illustrates a block diagram for the module according to an embodiment.
**Figure 2** illustrates a flow diagram for IT infrastructure optimization or transformation.

### DESCRIPTION OF THE INVENTION

Some embodiments of this invention, illustrating all its features, will now be discussed in detail.

The scope of the invention is defined by the independent claims. The words "comprising," "having," "containing," and "including," and other forms thereof, are intended to be equivalent in meaning and be open ended in that an item or items following any one of these words is not meant to be an exhaustive listing of such item or items, or meant to be limited to only the listed item or items.

It must also be noted that as used herein, the singular forms "a," "an," and "the" include plural references unless the context clearly dictates otherwise. Although any systems and methods similar or equivalent to those described herein can be used in the practice or testing of embodiments of the present invention, the preferred, systems and methods are now described.
The disclosed embodiments are merely exemplary of the invention, which may be embodied in various forms.

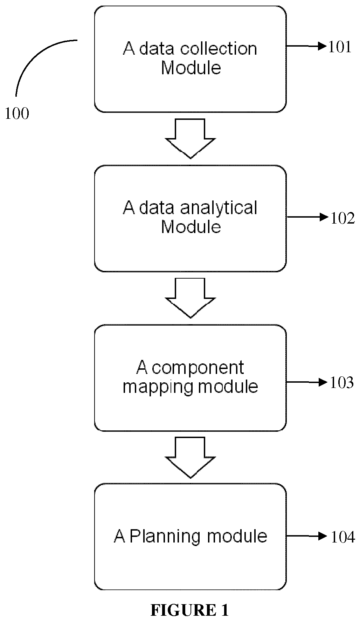

**Figure 1** illustrates a block diagram for the module according to an embodiment. According to an exemplary embodiment of the present disclosure, a system (**100**) is disclosed comprising a data collection module (**101**), a data analytical module (**102**), a component mapping module (**103**), and a planning module (**104**) each communicably connected.

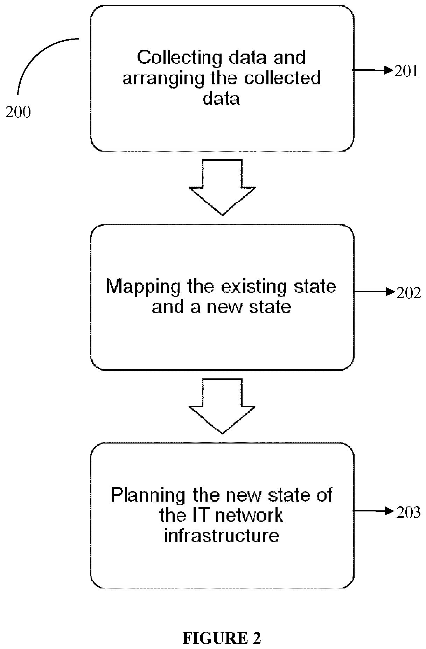

Referring to **Figure 1** and **Figure 2** wherein the system (**100**) according to an embodiment perform a method (**200**) for optimizing distributed enterprise information technology (IT) network infrastructure or network optimization. In the present invention, the data collection module (**101**) is configured to execute a step of collecting data and arranging the collected data (**201**) for optimizing distributed enterprise information technology (IT) network infrastructure or network optimization. The data collected and arranged pertains to the existing state of an information technology network infrastructure. The data captured either automatically using tools such as packet analyzers, Netflow analyzers, and Network discovery tool or manually by inspecting or by making suitable assumptions is arranged into first set of templates. The information gathered in the first set of templates before consolidation, pertains to at least one server, a plurality of network components, a plurality of applications and at least one data center. Further the data collected for the at least one server pertains to a number of NIC, device id's of each NIC, ports per NIC, and port bandwidth. Similarly the data collected for the at least one network component relates to number of slots per network component, ports per slot, ports bandwidth, and connectivity information. Similarly, for the plurality of applications the data collected pertains to type of the application, protocols used for communication, number of users supported, and bandwidth per user. Lastly for the at least one data center, data relating to WAN bandwidth associated with each data center, type of consolidation, and expected life years per data center is aggregated. In cases where the information is not available, data needs to be extracted from the reports/logs pertaining to the network components/applications and missing data needs to be filled with suitable assumptions.

According to the embodiment the analytical module (**102**) and the component mapping module (**103**) simultaneously perform the method of analyzing, and mapping the existing state and a new state (**202**) of at least one of the servers and the storage elements with the existing set of network elements. The analytical module (**102**) readily absorbs the data arranged in the first set of templates. The module that is the analytical module (**102**) and mapping module (**103**) determines the existing state of the network by analyzing the collected information. From the information gathered and analyzed about the existing network, a second set of templates is generated. The second set of templates contains information about the different network components with mapped with their critical parameters such as throughput, ports availability, ports bandwidth. The second set of templates further generates network topology information. The collected data the first set of templates is simultaneously considered with transformation activity in rest of information technology domain before generating the second set of templates. According to an embodiment the critical parameter associated as illustrated as follows: critical parameter for LAN in a data center that are captured are throughput of switch in mpps (Million packets per second), number of 1 and 10 gigabit-per-second ports supported for all the switches existing in the LAN. Further, the critical parameters are mapping connectivity of servers to access switches, then access switches to upper layer switches.

The planning module (**104**) is responsible for planning the new state of the IT network infrastructure (**203**) step according to the embodiment. The planning module decides the to-be-state of the network either after transformation or after optimization. The planning module is adapted to plan post transformational and post optimized state of the information technology network infrastructure depending upon the consolidation strategy of the distributed enterprise information technology network infrastructure derived from the analyzed data and mapped components of the information technology network in order to optimize the network performance. The consolidation strategy is selected from either consolidation within a data center only or consolidation of data centers. The optimization or transformation is based on constrains defined quality of service (QoS) desired by the organization or quality of experience (QoE). According an embodiment the present system disclosed is configured to analyze and compute the cost associated with the network and the data center. When the consolidation strategy selected enables consolidation within the data center a template is generated pertaining to the final state of the network by a method, wherein information relating to ports classification and assessment, throughput assessment, industry best network design practices, network infrastructure planning are captured. In another embodiment wherein the consolidation strategy selected refers to consolidation of data centers, information is captured and report in generated containing number of data centers after consolidation, and set of number of servers moved from different data centers to the target data center.

According to another embodiment of the present invention wherein the network optimization and transformation is enabled by reducing the number of the data centers by consolidating and reducing the server sprawl. After the reduction in the number of data centers is achieved by data center consolidation, the data collection module is configured to perform the step of collecting and arranging data of the existing and new setup. The data in the embodiment pertains to one or more of internet protocol (IP) traffic pattern, data traffic pattern, and existing network topology. The other information captures relates to the number of applications and services running, protocols used for communication, QoS requirement of applications, number of users accessing the applications and services, QoE in the current network. The embodiment further comprises of the data analytical module and the component mapping module simultaneously performing the step of analyzing the collected data by calculating the average and peak wide area network bandwidth required for the servers. Further the planning module executes a step of planning post optimized state of the information technology network infrastructure by verifying whether the existing average and peak wide area network bandwidth match with the values determined in the analysis step. When existing average and peak wide area network bandwidth does not match with the values determined in the analysis step the module computes for a solution wherein the solution to upgrade the WAN bandwidth of the network or the possible causes for bottlenecks is determined.

The machine may comprise a server computer, a client user computer, a personal computer (PC), a tablet PC, a laptop computer, a desktop computer, a control system, a network router, switch or bridge, or any machine capable of executing a set of instructions (sequential or otherwise) that specify actions to be taken by that machine. Further, while a single machine is illustrated, the term "machine" shall also be taken to include any collection of machines that individually or jointly execute a set (or multiple sets) of instructions to perform any one or more of the methodologies discussed herein.

The machine may include a processor (e.g., a central processing unit (CPU), a graphics processing unit (GPU, or both), a main memory and a static memory, which communicate with each other via a bus. The machine may further include a video display unit (e.g., a liquid crystal displays (LCD), a flat panel, a solid state display, or a cathode ray tube (CRT)). The machine may include an input device (e.g., a keyboard) or touch-sensitive screen, a cursor control device (e.g., a mouse), a disk drive unit, a signal generation device (e.g., a speaker or remote control) and a network interface device.

Dedicated hardware implementations including, but not limited to, application specific integrated circuits, programmable logic arrays and other hardware devices can likewise be constructed to implement the methods described herein.

Applications that may include the apparatus and systems of various embodiments broadly include a variety of electronic and computer systems. Some embodiments implement functions in two or more specific interconnected hardware modules or devices with related control and data signals communicated between and through the modules, or as portions of an application-specific integrated circuit. Thus, the example system is applicable to software, firmware, and hardware implementations.
In accordance with various embodiments of the present disclosure, the methods described herein are intended for operation as software programs running on a computer processor. Furthermore, software implementations can include, but not limited to, distributed processing or component/object distributed processing, parallel processing, or virtual machine processing can also be constructed to implement the methods described herein.

The illustrations of arrangements described herein are intended to provide a general understanding of the structure of various embodiments, and they are not intended to serve as a complete description of all the elements and features of apparatus and systems that might make use of the structures described herein. Many other arrangements will be apparent to those of skill in the art upon reviewing the above description. Other arrangements may be utilized and derived therefrom, such that structural and logical substitutions and changes may be made without departing from the scope of this disclosure, as defined by the independent claims. Figures are also merely representational and may not be drawn to scale. Certain proportions thereof may be exaggerated, while others may be minimized. Accordingly, the specification and drawings are to be regarded in an illustrative rather than a restrictive sense.

### ADVANTAGES OF THE INVENTION:

The present invention provides a method and system which uses constraint based optimization techniques to achieve WAN optimization, generate a topology map taking into account the new IT architecture post transformation, including the list of network components to be utilized, and perform both analysis of as-it-is state and transformed state i.e. to-be-states. As a result, the below mentioned advantages are achieved:
1. The present disclosure helps reduce or eradicate the dependency on a vendor when an organization decides to optimize or transform its existing IT infrastructure.
2. The use of present disclosure in association with e-Transform tool enables creation of a robust and scalable network infrastructure.
The present disclosure enables reduction of cost both in terms of operations and in terms of ownership.

## Claims

1. A computer implemented method for optimizing distributed enterprise information technology, IT, network infrastructure, the IT infrastructure comprising at least one server, at least one storage element, and a plurality of network components the method comprises processor implemented steps of:
a. collecting data (201) and arranging the collected data pertaining to an existing state of the information technology network infrastructure in a first set of templates, wherein the first set of templates includes information pertaining to the at least one server, the plurality of network components, a plurality of applications and at least one data center;
b. analyzing the collected data pertaining to the existing state by calculating average and peak of a wide area network bandwidth for the at least one server;
c. mapping (202) an analyzed state pertaining to the existing state and a new state of the at least one server, at least one storage element and a plurality of network components using the first set of templates to form a second set of templates; and
d. planning (203) the new state depending upon a consolidation strategy of the IT network infrastructure for transformation using the first set of templates and the second set of templates, the new state being the optimized state of the IT network infrastructure, wherein either the consolidation strategy enables consolidation within the at least one data center to enable generation of a template pertaining to the new state, or the consolidation strategy enables consolidation of the set of data centers by capturing of information and generation of a report after consolidation, and
e. planning a post optimized state of the IT network infrastructure by verifying whether an existing average and the peak wide area network bandwidth match with the values determined while analysing.

2. The method of claim 1, wherein the second set of templates comprises information obtained by mapping the existing state to the new state of at least one of the servers, storage elements and existing set of network components.

3. The method of claim 1, wherein the optimization is measured by one of QoS, QoE, cost, complexity, space and a combination thereof of the IT Network infrastructure and the optimized IT Network Infrastructure.

4. The method of claim 1, wherein the information pertaining to the plurality of network components is selected from the group comprising of slots per component, ports per slot, ports bandwidth, and connectivity information.

5. The method of claim 1, wherein the information pertaining to the plurality of applications includes at least one type of the application, protocols used for communication, number of users supported, and bandwidth per user.

6. The method of claim 1, further comprises of extracting said information from a report or a log pertaining to the network components or applications when the information is not available directly and filling suitable assumptions is case of missing information.

7. The method of claim 1, wherein the second set of templates includes analyzed data pertaining to the at least one network component with their respective critical parameters.

8. The method of claim 7 , wherein the critical parameters include at least one of throughput, ports availability, and ports bandwidth.

9. The method of claim 1, wherein the distributed enterprise information technology, IT, network infrastructure is optimized by processor implemented steps of:
a. collecting data pertaining to the one or more of IP traffic pattern, Data traffic pattern, existing network topology, information about number of applications/services running, protocols used for communication, Quality of Service, QoS, requirement of applications, number of users accessing the applications/services, and Quality of Experience, QoE, in the current network; and
b. analyzing the collected data by calculating the existing average and peak wide area network bandwidth required for the servers;

10. The method of claim 9, wherein said peak wide area network bandwidth of the network is upgraded if existing wide area network bandwidth is not matching with the analytical derivative of required value and determining possible causes for bottlenecks if existing wide area network bandwidth is matching with the analytical derivative of required value.

11. A system for transforming and optimizing distributed enterprise information technology, IT, network infrastructure, wherein the system comprising:
a. a data collection module (101) adapted to collect data pertaining to the existing state of the information technology network and arranging said collected data in a first set of templates, wherein the first set of templates includes information pertaining to at least one server, the plurality of network components, a plurality of applications and at least one data center;
b. an analytical module (102) adapted to analyze the collected data pertaining to the existing state by calculating average and peak wide area bandwidth for the servers;
c. a component mapping module (103) adapted to map the analyzed data pertaining to the existing state of at least one server, the at least one storage element and the at least one network element using the first set of templates to form a second set of templates; and
d. a planning module (104) adapted to plan a new state depending upon a consolidation strategy of the IT network infrastructure for transformation using the first set of templates and the second set of templates, the new state being an optimized state of the IT network infrastructure, wherein the consolidation strategy within the at least one data center enables generation of a template pertaining to the new state, and the consolidation of the set of data centers enable capturing of information and generation of a report after consolidation; and
e. the planning module (104) further adapted to plan a post optimized state of the IT network infrastructure by verifying whether an existing average and the peak wide area network bandwidth match with the values determined while analyzing.

12. The system of claim 11, wherein the distributed information technology network infrastructure comprises servers, storage devices, and network devices.

## Patentansprüche

1. Computerimplementiertes Verfahren zur Optimierung verteilter Unternehmensinformationstechnologie (IT)-Netzwerkinfrastruktur, die IT-Infrastruktur umfassend mindestens einen Server, mindestens ein Speicherelement und eine Vielzahl von Netzwerkkomponenten, das Verfahren umfassend folgende prozessorimplementierte Schritte:
a. Sammeln von Daten (201) und Anordnen der gesammelten Daten, gehörend zu einem existierenden Zustand der Informationstechnologie-Netzwerkinfrastruktur, in einem ersten Satz von Vorlagen, wobei der erste Satz von Vorlagen Information umfasst, gehörend zu dem mindestens einen Server, der Vielzahl von Netzwerkkomponenten, einer Vielzahl von Anwendungen und mindestens einem Datenzentrum;
b. Analysieren der gesammelten Daten, gehörend zu dem existierenden Zustand, durch Berechnung einer durchschnittlichen und höchsten Weitverkehrsnetzwerkbandbreite für den mindestens einen Server;
c. Mapping (202) eines analysierten Zustands, gehörend zu dem existierenden Zustand, und eines neuen Zustands des mindestens einen Servers, mindestens eines Speicherelements und einer Vielzahl von Netzwerkkomponenten unter Verwendung des ersten Satzes von Vorlagen, um einen zweiten Satz von Vorlagen zu bilden; und
d. Planen (203) des neuen Zustands abhängig von einer Konsolidierungsstrategie der IT-Netzwerkinfrastruktur zur Transformation unter Verwendung des ersten Satzes von Vorlagen und des zweiten Satzes von Vorlagen, welcher neue Zustand der optimierte Zustand der IT-Netzwerkinfrastruktur ist, wobei entweder die Konsolidierungsstrategie die Konsolidierung innerhalb des mindestens einen Datenzentrums ermöglicht, um die Erzeugung einer Vorlage, gehörend zu dem neuen Zustand zu ermöglichen, oder die Konsolidierungsstrategie die Konsolidierung des Satzes von Datenzentren durch Erfassung von Information und Erzeugung eines Berichts nach der Konsolidierung ermöglicht, und
e. Planen eines postoptimierten Zustands der IT-Netzwerkinfrastruktur durch Überprüfung, ob eine existierende durchschnittliche und höchste Weitverkehrsnetzwerkbandbreite mit den Werten, bestimmt bei der Analyse, übereinstimmen.

2. Verfahren nach Anspruch 1, wobei der zweite Satz von Vorlagen Information umfasst, gewonnen durch Mapping des existierenden Zustands mit dem neuen Zustand von mindestens einem der Server, Speicherelemente und des existierenden Satzes von Netzwerkkomponenten.

3. Verfahren nach Anspruch 1, wobei die Optimierung gemessen wird durch eines von QoS, QoE, Kosten, Komplexität, Platz und eine Kombination davon der IT-Netzwerkinfrastruktur und der optimierte IT-Netzwerkinrastruktur.

4. Verfahren nach Anspruch 1, wobei die Information, gehörend zu der Vielzahl von Netzwerkkomponenten, ausgewählt ist aus der Gruppe, umfassend Einschübe pro Komponente, Anschlüsse pro Einschub, Anschlussbandbreite und Konnektivitätsinformation.

5. Verfahren nach Anspruch 1, wobei die Information, gehörend zu der Vielzahl von Anwendungen, mindestens einen Typ von Anwendungen, Protokollen, verwendet für die Kommunikation, Anzahl unterstützter Benutzer und Bandbreite pro Benutzer umfasst.

6. Verfahren nach Anspruch 1, ferner umfassend das Extrahieren der Information von einem Bericht oder einem Protokoll, gehörend zu dem Netzwerk, oder Anwendungen, wenn die Information nicht direkt verfügbar ist, und Anfüllen geeigneter Vermutungen im Fall fehlender Information.

7. Verfahren nach Anspruch 1, wobei der zweite Satz von Vorlagen analysierte Daten, gehörend zu der mindestens einen Netzwerkkomponente mit ihren jeweiligen kritischen Parametern, umfasst.

8. Verfahren nach Anspruch 7, wobei die kritischen Parameter mindestens eines von Durchsatz, Anschlussverfügbarkeit und Anschlussbandbreite umfassen.

9. Verfahren nach Anspruch 1, wobei die verteilte Unternehmensinformationstechnologie (IT)-Netzwerkinfrastruktur durch folgende prozessorimplementierte Schritte optimiert wird:
a. Sammeln von Daten, gehörend zu der einen oder den mehreren von IP-Verkehrsmustern, Datenverkehrsmustern, existierender Netzwerktopologie, Information über Anzahl laufender Anwendungen/Dienste, für Kommunikation verwendeten Protokollen, Quality of Services, QoS, Anforderung von Anwendungen, Anzahl Benutzer, Zugriff auf Anwendungen/Dienste und Quality of Experience, QoE in dem aktuellen Netzwerk;
und
b. Analysieren der gesammelten Daten durch Berechnung der existierenden durchschnittlichen und höchsten Weitverkehrsnetzwerkbandbreite, benötigt für die Server.

10. Verfahren nach Anspruch 9, wobei die höchste Weitverkehrsnetzwerkbandbreite des Netzwerks aktualisiert wird, wenn die existierende Weitverkehrsnetzwerkbandbreite nicht mit der analytischen Ableitung von erforderlichem Wert übereinstimmt, und Bestimmung möglicher Ursachen für Engpässe, wenn die existierende Weitverkehrsnetzwerkbandbreite mit der analytischen Ableitung des erforderlichen Werts übereinstimmt.

11. System zur Transformation und Optimierung verteilter Unternehmensinformationstechnologie (IT)-Netzwerkinfrastruktur, wobei das System Folgendes umfasst:
a. ein Datensammelmodul (101), angepasst zum Sammeln von Daten, gehörend zu dem existierenden Zustand des Informationstechnologienetzwerks, und Anordnen der gesammelten Daten in einem ersten Satz von Vorlagen, wobei der erste Satz von Vorlagen Information umfasst, gehörend zu dem mindestens einen Server, der Vielzahl von Netzwerkkomponenten, einer Vielzahl von Anwendungen und mindestens einem Datenzentrum;
b. ein analytisches Modul (102), angepasst zum Analysieren der gesammelten Daten, gehörend zu dem existierenden Zustand, durch Berechnung durchschnittlicher und höchster Weitverkehrsbandbreite für die Server;
c. ein Komponentenmappingmodul (103), angepasst zum Mappen der analysierten Daten, gehörend zu dem existierenden Zustand des mindestens einen Servers, des mindestens einen Speicherelements und des mindestens einen Netzwerkelements, unter Verwendung des ersten Satzes von Vorlagen, um einen zweiten Satz von Vorlagen zu bilden; und
d. ein Planungsmodul (104), angepasst zum Planen eines neuen Zustands abhängig von einer Konsolidierungsstrategie der IT-Netzwerkinfrastutur zur Transformation unter Verwendung des ersten Satzes von Vorlagen und des zweiten Satzes von Vorlagen, welcher neue Zustand ein optimierter Zustand der IT-Netzwerkinfrastruktur ist, wobei die Konsolidierungsstrategie innerhalb des mindestens einen Datenzentrums die Erzeugung einer Vorlage, gehörend zu dem neuen Zustand, ermöglicht, und die Konsolidierung des Satzes von Datenzentren die Erfassung von Information und Erzeugung eines Berichts nach der Konsolidierung ermöglicht; und
e. das Planungsmodul (104) ferner angepasst zum Planen eines postoptimierten Zustands der IT-Netzwerkinfrastruktur durch Überprüfung, ob eine existierende durchschnittliche und die höchste Weitverkehrsnetzwerkbandbreite mit den Werten, bestimmt bei der Analyse, übereinstimmen.

12. System nach Anspruch 11, wobei die verteilte Informationstechnologie-Netzwerkinfrastruktur Server, Speichervorrichtungen und Netzwerkvorrichtungen umfasst.

## Revendications

1. Procédé mis en oeuvre par ordinateur pour optimiser une infrastructure de réseau d'entreprise répartie de technologie de l'information, IT, l'infrastructure IT comprenant au moins un serveur, au moins un élément de stockage et une pluralité de composants de réseau, le procédé comprend les étapes suivantes mises en oeuvre par processeur :
a. collecter des données (201) et placer les données collectées se rapportant à un état existant de la structure de réseau de technologie de l'information dans un premier ensemble de modèles, le premier ensemble de modèles comprenant des informations se rapportant audit au moins un serveur, à la pluralité de composants de réseau, à une pluralité d'applications et à au moins un centre informatique ;
b. analyser les données collectées se rapportant à l'état existant en calculant une moyenne et un pic de la bande passante d'un réseau étendu pour ledit au moins un serveur ;
c. établir une correspondance (202) entre un état analysé se rapportant à l'état existant et un nouvel état dudit au moins un serveur, au moins un élément de stockage et une pluralité de composants de réseau utilisant le premier ensemble de modèles pour former un deuxième ensemble de modèles ; et
d. préparer (203) le nouvel état en fonction d'une stratégie de consolidation de l'infrastructure de réseau IT pour une transformation utilisant le premier ensemble de modèles et le deuxième ensemble de modèles, le nouvel état étant l'état optimisé de l'infrastructure de réseau IT, où soit la stratégie de consolidation permet la consolidation dans ledit au moins un centre informatique pour permettre la génération d'un modèle se rapportant au nouvel état, soit la stratégie de consolidation permet la consolidation de l'ensemble de centres informatiques par une capture d'informations et la génération d'un rapport après consolidation, et
e. préparer un état post-optimisé de l'infrastructure de réseau IT en vérifiant si une moyenne existante et le pic de bande passante de réseau étendu correspondent aux valeurs déterminées pendant l'analyse.

2. Procédé selon la revendication 1, dans lequel le deuxième ensemble de modèles comprend des informations obtenues en établissant une correspondance entre l'état existant et le nouvel état d'au moins l'un des serveurs, des éléments de stockage et de l'ensemble existant de composants de réseau.

3. Procédé selon la revendication 1, dans lequel l'optimisation est mesurée par un paramètre parmi la QS, la QE, le coût, la complexité, l'espace et une combinaison de ceux-ci, de l'infrastructure de réseau IT et de l'infrastructure de réseau IT optimisée.

4. Procédé selon la revendication 1, dans lequel les informations se rapportant à la pluralité de composants de réseau sont choisies dans le groupe comprenant les fentes par composant, les ports par fente, la bande passante des ports et des informations de connectivité.

5. Procédé selon la revendication 1, dans lequel les informations se rapportant à la pluralité d'applications comprennent au moins un élément parmi le type de l'application, les protocoles utilisés pour la communication, le nombre d'utilisateurs supporté et la bande passante par utilisateur.

6. Procédé selon la revendication 1, comprenant en outre l'extraction desdites informations d'un rapport ou d'un journal se rapportant aux composants de réseau ou aux applications quand les informations ne sont pas disponibles directement et le remplissage avec des hypothèses appropriées en cas d'information manquante.

7. Procédé selon la revendication 1, dans lequel le deuxième ensemble de modèles comprend des données analysées se rapportant audit au moins un composant de réseau avec leurs paramètres critiques respectifs.

8. Procédé selon la revendication 7, dans lequel les paramètres critiques comprennent au moins un élément parmi le débit, la disponibilité des ports et la bande passante des ports.

9. Procédé selon la revendication 1, dans lequel l'infrastructure de réseau d'entreprise répartie de technologie de l'information, IT, est optimisée par les étapes suivantes mises en oeuvre par processeur :
a. collecter des données se rapportant à un ou plusieurs paramètres parmi la structure de trafic IP, la structure de trafic de Données, une topologie de réseau existante, une information sur le nombre d'applications/services en cours d'exécution, les protocoles utilisés pour la communication, la Qualité de Service, QS, l'exigence des applications, le nombre d'utilisateurs accédant aux applications/services, et la Qualité d'Expérience, QE, dans le réseau courant ; et
b. analyser les données collectées en calculant la moyenne existante et le pic de bande passante de réseau étendu nécessaires pour les serveurs.

10. Procédé selon la revendication 9, dans lequel le pic de bande passante de réseau étendu du réseau est mis à niveau si la bande passante de réseau étendu existante ne correspond pas à la dérivée analytique de la valeur nécessaire et la détermination des causes possibles de goulots d'étranglement si la bande passante de réseau étendu existante correspond à la dérivée analytique de la valeur nécessaire.

11. Système permettant de transformer et d'optimiser une infrastructure de réseau d'entreprise répartie de technologie de l'information, IT, le système comprenant :
a. un module de collecte de données (101) adapté pour collecter des données se rapportant à l'état existant du réseau de technologie de l'information et placer lesdites données collectées dans un premier ensemble de modèles, le premier ensemble de modèles comprenant des informations se rapportant à au moins un serveur, à la pluralité de composants de réseau, à une pluralité d'applications et à au moins un centre informatique ;
b. un module analytique (102) adapté pour analyser les données collectées se rapportant à l'état existant en calculant une moyenne et un pic de bande passante d'un réseau étendu pour les serveurs ;
c. un module de correspondance de composants (103) adapté pour établir une correspondance entre les données analysées se rapportant à l'état existant d'au moins un serveur, dudit au moins un élément de stockage et dudit au moins un élément de réseau utilisant le premier ensemble de modèles pour former un deuxième ensemble de modèles ; et
d. un module de préparation (104) adapté pour préparer un nouvel état en fonction d'une stratégie de consolidation de l'infrastructure de réseau IT pour une transformation utilisant le premier ensemble de modèles et le deuxième ensemble de modèles, le nouvel état étant un état optimisé de l'infrastructure de réseau IT, où la stratégie de consolidation dans ledit au moins un centre informatique permet la génération d'un modèle se rapportant au nouvel état, et la consolidation de l'ensemble de centres informatiques permet une capture d'informations et la génération d'un rapport après consolidation ; et
e. le module de préparation (104) est en outre adapté pour préparer un état post-optimisé de l'infrastructure de réseau IT en vérifiant si une moyenne existante et le pic de bande passante de réseau étendu correspondent aux valeurs déterminées pendant l'analyse.

12. Système selon la revendication 11, dans lequel l'infrastructure de réseau répartie de technologie de l'information comprend des serveurs, des dispositifs de stockage et des dispositifs de réseau.
